# EUROPEAN PATENT SPECIFICATION

(11) **EP 1 687 500 B1**
(45) Date of publication and mention of the grant of the patent: **11.11.2009**
(21) Application number: 04821668.3
(22) Date of filing: 23.09.2004
(51) Int. Cl.: E04H 6/00

(54) **lift for a multi-level storage system**
Lift für eine mehrstöckige Lagerunssystem
ascenseur pour système de rangement multiniveau

(30) Priority: 25.09.2003 ZA 200307428; 19.12.2003 ZA 200309839
(43) Date of publication of application: 09.08.2006
(73) Proprietor: Frank, Dion Stuart, 7700 Claremont (ZA); Segal, Maurice, Ein Karem 95744 Jerusalem (IL)
(72) Inventor: Frank, Dion Stuart, 7700 Claremont (ZA); Segal, Maurice, Ein Karem 95744 Jerusalem (IL)
(74) Representative: Martin, Didier Roland Valéry
(86) International application number: PCT/ZA2004/000116
(87) International publication number: WO 2005/095735

(56) References cited:
- EP-A- 0 396 925
- FR-A- 2 123 099

## Description

### FIELD OF THE INVENTION

THIS INVENTION relates to a lift for a multi-level storage system and specifically, but not exclusively, to such a lift for parking garages.

### BACKGROUND TO THE INVENTION

The space required within which vehicles can be parked conventionally comprises the parking bay itself which must be of sufficient width to enable vehicle doors to be opened, access ramps to enable vehicles to be driven to the bays and pedestrian access to the bays. The overall result is waste of space.

If an automated parking system is used, the pedestrian access and driveways for the vehicles can be omitted and space is saved.

An object of the invention is substantially to decrease the time taken to park and retrieve a vehicle, which in existing automatic systems is long relative to the time required to drive into and park in a ramped parking garage . This relative slowness has made automated parking garages unpopular with the users who are forced to wait for the vehicles to be delivered to them, especially at rush hours. The problems of slow delivery are in some instances due to the time taken to deliver vehicles by an insufficient number of lifts.

Applicants are aware of the following disclosures of automatic parking garages:

| | |
|---|---|
| US 5469676 | US 6004091 |
| US 5674040 | US 5478182 |
| US 4039089 | US 5024573 |
| US 5915908 | US 5851098 |
| Swiss 684203 | EP 445712 |
| Japan 449377 | Japan 63222406 |

It is also known from FR-2 123 099 a lift for a storage system as mentioned in the preamble of claim 1.

### BRIEF SUMMARY OF THE INVENTION

According to the present invention there is provided a lift for a storage system, the lift comprising two sets of endless elements with load supporting platforms attached thereto at intervals, the lift having an operative run in which the platforms are horizontal and can support a load and an inoperative run in which the platforms are upright, the platforms being permanently connected to one set of endless elements and detachably connected to the other set of endless elements, and means at the upper and lower ends of the lift for displacing said platforms between a horizontal, operative position in which they are connected to both of said sets of elements and an inoperative, upright position in which they are connected to one of said sets of elements only.

Each platform can comprise a series of parallel spaced bars each of which is supported at one end only thereby to form a comb. Preferably each platform comprises two series of parallel bars, the bars of each series being supported at one end only thereby to form two combs, the free ends of the bars of the two combs facing one another across a gap.

Said one set of elements comprises a first pair of endless elements, the endless elements of the first pair being entrained around first pairs of upper wheels rotatable about a first common axis and the lower wheels being rotatable about a second common axis parallel to said first common axis, there being means for driving the upper or lower pairs of wheels and said platforms being pivotally and permanently connected to said first pair of endless elements, the other set of endless elements comprising a second pair of endless elements, the elements of the second pair being entrained around second pairs of upper and lower wheels, the upper wheels of the second pair being rotatable about a common third axis and the lower wheels of the second pair being rotatable about a common fourth axis, the third and fourth axes being parallel to one another, and there being means for releasably attaching the platforms to the second pair of endless elements whilst the platforms are in the operative horizontal positions thereof.

In the preferred construction, each lift comprises two sets of endless elements with load supporting platforms attached thereto at intervals, each lift having an operative run in which the platforms are horizontal and can support a load and an inoperative run in which the platforms are upright, the platforms being permanently connected to one set of endless elements and detachably connected to the other set of endless elements, and means at the upper and lower ends of the lift for displacing said platforms between a horizontal, operative position in which they are connected to both of said sets of elements and an inoperative, upright position in which they are connected to one of said sets of elements only.

Said one set of endless elements of each lift can comprise a first pair of endless elements, the endless elements of the first pair being entrained around first pairs of upper wheels rotatable about a first common axis and the lower wheels being rotatable about a second common axis parallel to said first common axis, there being means for driving the upper or lower pairs of wheels and said platforms being pivotally and permanently connected to said first pair of endless elements, the other set of endless elements of each lift comprising a second pair of endless elements, the elements of the second pair being entrained around second pairs of upper and lower wheels, the upper wheels of the second pair rotatable about a common third axis and the lower wheels of the second pair rotating about a common fourth axis, the third and fourth axes being parallel to one another, and there being means for releasably attaching the platforms to the second pair of endless elements whilst the platforms are in the operative horizontal positions thereof.

### BRIEF DESCRIPTION OF THE DRAWINGS

For a better understanding of the present invention, and to show how the same may be carried into effect, reference will now be made, by way of example, to the accompanying drawings in which:-

The embodiments shown in figures 6-12 are not part of the claimed invention.
Figure 1 is a diagrammatic top plan view of the entry and exit level of a vehicle parking garage;
Figure 2 is a diagrammatic top plan view of a parking level;
Figure 3 is a detail of a vehicle supporting structure;
Figure 4 is a top plan view of a vehicle lift;
Figure 5 is a side elevation of a vehicle lift;
Figure 6 is a plan view of a modified entry and exit level.
Figure 7 is a diagrammatic top plan view of the entry and exit level of a further vehicle parking garage;
Figure 8 is a diagrammatic top plan view of a parking level of the garage of Figure 7;
Figure 9 is a diagrammatic top plan view of the entry and exit level of another vehicle parking garage;
Figure 10 is a diagrammatic top plan view of a parking level of the garage of Figure 9; and
Figures 11 and 12 illustrate another form of parking garage.

### DETAILED DESCRIPTION OF THE DRAWINGS

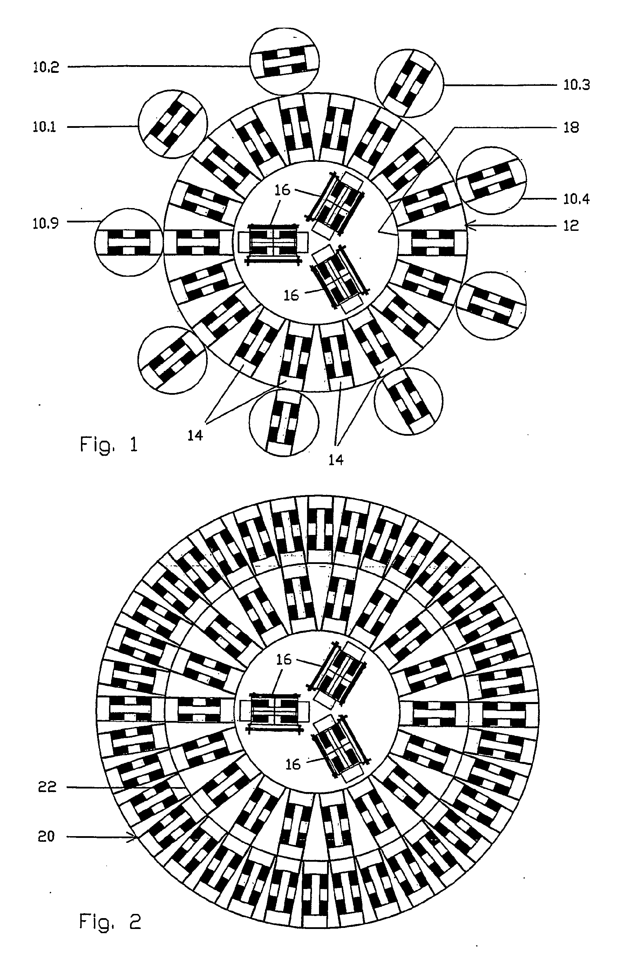

Referring firstly to Figure 1, the vehicle parking garage is constructed on a circular format and includes entry and exit turntables. In the illustrated embodiment there are nine equally spaced turntables designated 10.1, 10.2 etc. Turntables 10.1 and 10.2 are shown in the position they adopt whilst a vehicle is being driven on or driven off. Turntables 10.3 to 10.9 are shown in the position they adopt to enable a vehicle to be transferred between a turntable and a rotatable transfer ring 12 which lies radially inwardly of the turntables 10.1, 10.2 etc. The ring 12 has eighteen bays designated 14.

Three vehicle lifts (or elevators) 16 are provided within a central shaft 18 which is encircled by the transfer ring 12. The term "lifts" is used for the sake of convenience but it will be appreciated that these simply comprise platforms moving on conveyor chains.

In Figure 2, which shows the floor layout from the first floor upwards, there is a stationary outer structure 20 which, in the illustrated embodiment, provides parking for vehicles in a radial position. Inwardly of the structure 20 there is a rotating transfer ring 22. The lifts 16 are also shown in Figure 2.

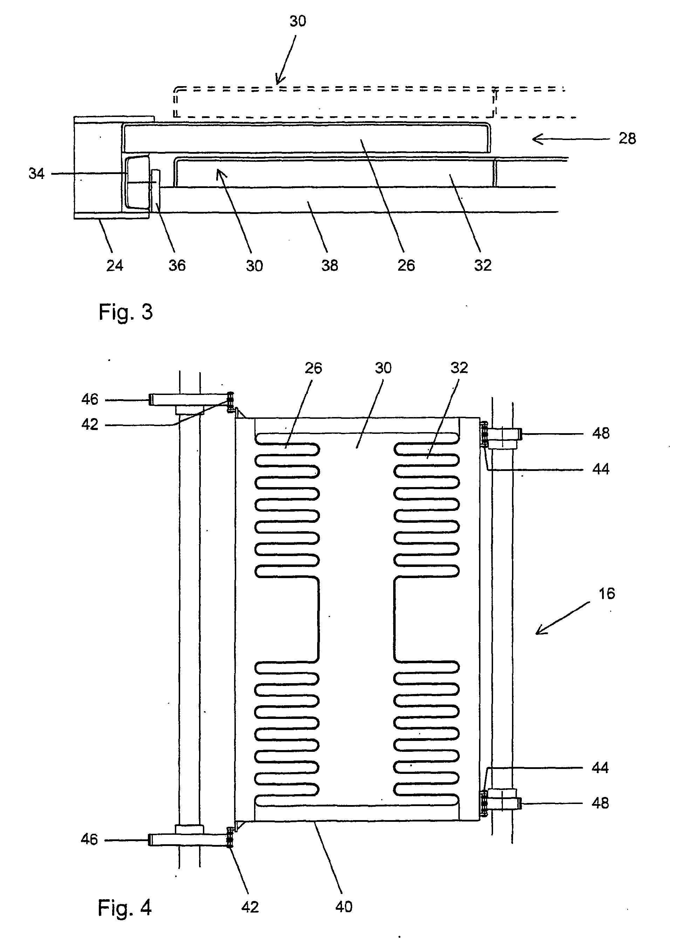

The structure shown in Figure 3 comprises an end support 24 from which a series of parallel spaced bars 26 protrude. The bars 26 are supported at one end only and thus form a fixed comb designated 28. A movable comb 30 is also shown, this consisting of a series of parallel bars 32. The movable comb 30 can be displaced up and down so that the bars 32 pass through the gaps between the bars 26. Drive means (not shown) for moving the comb 30 in forward and backward movements and in up and down movements are provided. In Figure 3 the movable comb 30 is shown twice. More specifically it is shown in full lines below the fixed comb 28 and in dotted lines above the fixed comb 28. A wheel 34 is shown which runs on the end support 24. A support 36 is carried by the wheel 34 and a carriage 38 is in turn carried by the support 36. The structure illustrated is repeated on the other side of the carriage so that both sides of the carriage are supported by pairs of wheels 34. This permits the carriage to move backwards and forwards carrying the comb 30 with it. The comb 30 can, as described, be raised and lowered with respect to the carriage 38.

At entry level the floor of each turntable 10.1, 10.2 etc, comprises a fixed comb 28 and a movable comb 30. There are in addition three movable combs 30 aligned with the lifts and located in pits at a level below the fixed combs 28 of the bays 14. These combs move vehicles between the ring 12 and fixed combs 28 in the lifts 16.

The lifts 16 have floors consisting of fixed combs 28.

At each parking level each vehicle bay in the outer ring 20 has a floor consisting of a fixed comb 28. Each bay of the transfer ring 22 has a floor comprising a movable comb 30 and a fixed comb 28.

To avoid the use of more material than is required, each comb can comprise sets of bars arranged where the wheels of a vehicle will be positioned. Thus, in Figure 4, the fixed comb comprises four sets of bars 32 linked together to form the comb. This construction is possible everywhere except insofar as the turntables are concerned which is the only place where the vehicles being parked or retrieved are driven. A support covering the full area of the turntable is thus required. This is accomplished by the movable combs 30 being kept at a central height level with the fixed combs 28 so as to maintain a level surface for the vehicles to be driven onto and to stand on.

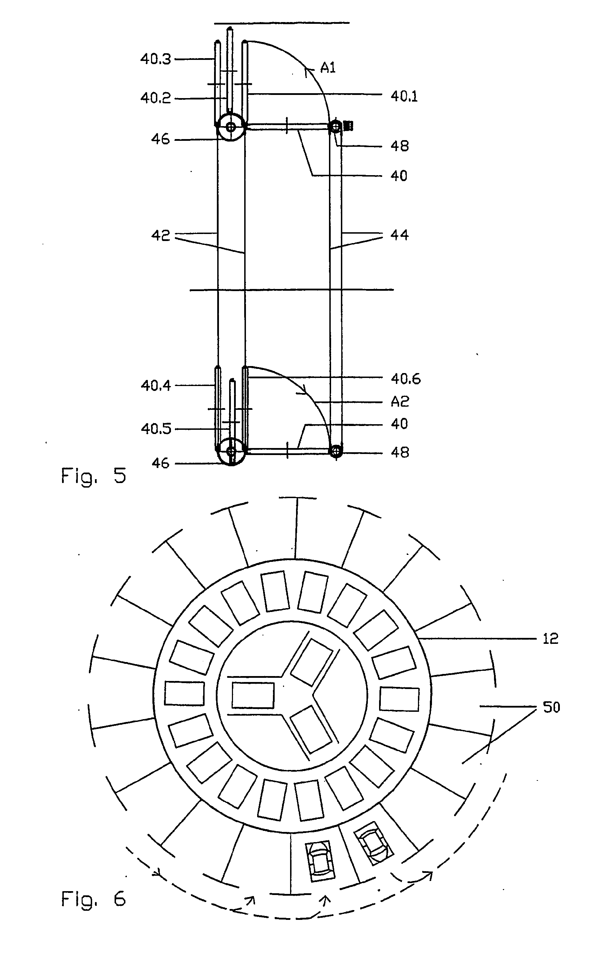

The fixed comb 28 of each lift 16 forms part of a platform 40 (Figures 4 and 5) which is secured to pairs of chains 42, 44 which are driven by pairs of upper and lower wheels in the form of chain sprockets 46, 48. The sprockets 46, 48 are linked together by further chains to ensure that the chains 42, 44 move in unison. The left hand edge of the platform 40 can pivot with respect to the chains 42 but cannot be detached therefrom. The mountings for the left hand side of the platform 40 comprise short spigots which enable the platforms to swing over, as will be described, without interference. The right hand edge of the platform 40 is supported by the chains 44 but can be detached therefrom. Chains are preferred but other endless elements such as toothed belts entrained around toothed wheels can be used.

Referring now to Figure 5, this shows the upper and lower ends of the vertical extent of one of the lifts. This thus illustrates entry level (Figure 1) and the top parking floor.

Upon the platform 40 at the upper parking level starting to move beyond that level, a hydraulic or pneumatic cylinder, or a mechanical device, moves the top platform 40 to the position shown at 40.1. This position is preferably upright, but in this context upright also covers a small angle of inclination to vertical. This movement is indicated by the arrow A1. As the top sprocket 46 turns anticlockwise, the platform 40 moves from the position 40.1 through the position 40.2 to the position 40.3. It is retained in this vertical position whilst it is in the inoperative return run of the lift. This is the left hand run in Figure 5. As the platform reaches the lower sprocket 46 it is moved from the position 40.4, which it is in when it reaches the lower sprocket 46, through the position 40.5 to the position 40.6 from which it is swung down, as shown by the arrow A2, so that its right hand edge is re-supported by the chains 44.

This arrangement ensures that the unused return run takes up as little space as possible in the centre shaft.

It will be understood that the chains 42, 44 can be driven in either direction, and that the spacing between the platforms 40 equals the spacing between floors.

In use, a vehicle is driven onto a turntable whilst it is as shown at 10.1, 10.2. Once the driver and any passengers have parked the vehicle and departed, doors (not shown) to the turntable area are closed and the turntable rotates to the position shown at 10.3, 10.4 etc.

After appropriate rotation of the transfer ring 12, the movable comb 30 under the turntable moves to its upper position, its bars passing between the bars of the fixed comb 28 of the turntable and lifting the vehicle off the fixed comb 28 of the turntable. The movable comb 30 then moves radially inwardly with its carriage 28 so that the vehicle is now in one of the bays 14 of the transfer ring 12. The movable comb 30 then drops to its lower position and returns to its station under the fixed comb 28 of the turntable. It then rises so that it is level with the fixed comb 28 of the turntable. At the same time the ring 12 rotates until the vehicle is aligned with one of the lifts 16. The movable comb 30 associated with that lift is raised to above the level of the fixed comb 28 of the bay 14 which is aligned with the lift 16. The movable comb 30 lifts the vehicle off the fixed comb 28 of the transfer bay 14 and deposits it onto one of the platforms 40 of the lift 16.-After comb 30 has been lowered, the carriage returns to its station under a transfer bay. The lift 16 then raises or lowers the vehicle to the designated floor.

At the designated floor that one of the movable combs of the transfer ring 22, which is aligned with the lift 16, moves radially inwardly and then upwardly to lift the vehicle off the fixed comb of the platform 40. The movable comb moves radially outwardly and downwards, and the inner ring 22 is subsequently rotated, with the vehicle supported on the fixed comb of the respective bay, until it is aligned with the designated bay of the outer ring 20. The movable comb is then raised to its upper position, carries the vehicle radially outwardly and lowers it onto the fixed comb of the designated bay before retracting to the inner ring 22. If it is desired, the vehicle may remain on the inner ring 22 and does not have to be transferred.

A vehicle is retrieved by the reverse of the procedure outlined above.

If desired the turntables can be omitted as shown in Figure 6. Sufficient road space is then provided outwardly of the rotatable transfer ring to enable a driver to park his vehicle in one of a series of demarked bays 50 radially outwardly of the ring 12. The bays 50 can have markings, which can be illuminated to enable a driver to position his vehicle correctly. The base of each bay 50 is in the form of a fixed comb.

The bays 50 can be enclosed by gates for safety purposes and the dividers between the bays 50 and the bays 14 can be roller blinds onto which instructions can be projected. Once one of these blinds has rolled up, one of the movable combs 30 of the ring 12 moves outwardly, rises through the fixed comb, lifts the vehicle and carries it into a bay 14. Thereafter the parking procedure is as described above.

Whilst the structure is primarily intended as a parking garage for vehicles, it can be used to store shipping containers or palletized loads.

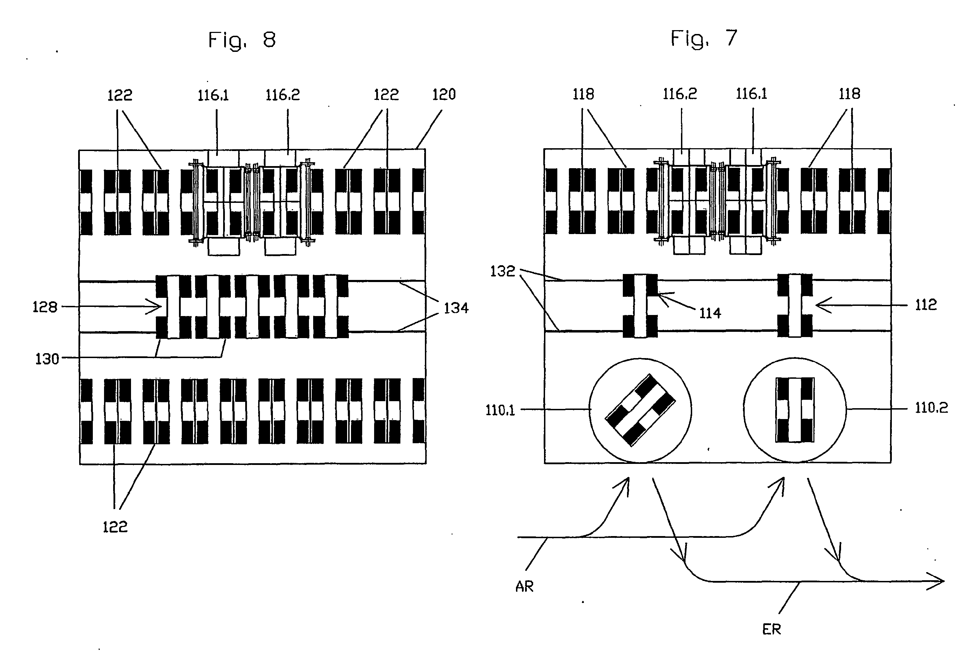

Referring now to Figure 7, the vehicle parking garage is constructed on a rectangular format and includes entry and exit turntables. In the embodiment illustrated in Figures 7 and 8 there are two turntables designated 110.1 and 110.2. More than two turntables, preferably equally spaced apart, can be provided. The turntable 110.1 is shown in the position it adopts whilst a vehicle is being driven in. Turntable 110.2 is shown in the position it adopts to enable a vehicle to be transferred between the turntable and the left hand one of two reciprocable shuttles 112 and 114 which are alongside the turntables 110.1, 110.2. On the opposite side of the shuttles 112, 114 to the turntables there are two lifts (or elevators) 116.1, 116.2 and parking bays 118 outwardly of each lift 116.1, 116.2. In the illustrated embodiment there are three parking bays 118 outwardly of each lift.

The shuttle 112 moves back and forth between the intermediate position shown, in which it is aligned with the turntable 110.2, and two end positions in one of which it is aligned with the end bay 118 and in the other of which it is aligned with the lift 116.1. Similarly the shuttle 114 moves between the intermediate position shown, in which it is aligned with the turntable 110.1, and two end positions in one of which it is aligned with the lift 116.2 and in the other of which it is aligned with the other end bay 118. Each shuttle 112, 114 has a single vehicle bay.

The lifts 116.1, 116.2 are immediately adjacent one another and are as described above.

In Figure 8, which shows the floor layout from the first floor upwards, there is a stationary structure 120 which provides two rows of parking bays 122 for vehicles. The lifts 116.1, 116.2 are also shown in Figure 8 and pass upwardly through the structure 120.

Between the two rows of bays 122 there is a further reciprocable shuttle 128. The shuttle 128 comprises, in the illustrated form, five vehicle bays 130. The two end bays 130 are always required for use in parking and returning vehicles. The three middle bays 130 can, at least at some times, be used as parking bays.

The shuttles 112, 114 and 128 are carried on rollers or wheels (not shown) which run on rails 132, 134 (see Figures 7 and 8).

On entry level the floors of the turntables 110.1, 110.2 are constituted by fixed combs, the bays of the shuttles 112, 114 have floors constituted by movable combs, the lifts 116.1, 116.2 have floors constituted by fixed combs, and the bays 118 have floors constituted by fixed combs. On each parking level the bays 122 of the structure 120 have floors constituted by fixed combs and the floors of the bays 130 are constituted by movable combs. If a bay 130 is to be used as a parking bay then its floor comprises both a fixed and a movable comb. The fixed and movable combs are as described above and will not be described in detail herein.

It will be understood that the parking levels may be below the entry level instead of above it or there may be parking levels both above and below entry level.

A vehicle to be parked enters on the approach road and is directed by road markings and illuminated signs along the path designated AR onto a turntable which is positioned as turntable 110.1 is so that the vehicle can easily be driven onto the turntable. The vehicle is supported by the turntable's fixed comb.

The turntables are in an enclosure having vehicle doors at each end of it and a pedestrian door to one side. At the time the vehicle is driven in, the vehicle door leading from the enclosure to the shuttle 114 is closed. It is also possible for the enclosure to have a door allowing entrance from the road AR and a further door allowing exit to the road ER.

Once the driver has locked the vehicle and left the enclosure via the pedestrian door, the vehicle door leading to the approach road and the pedestrian door close and the door leading to the shuttle opens.

The shuttle 114 moves to the position in which it is aligned with the turntable 110.1 and the turntable 110.1 rotates so that the vehicle's nose is pointing in the direction of entry and its rear towards the shuttle. The turntable stops when it is the same position as the turntable 110.2. The movable comb of the shuttle 114 moves outwardly under the fixed comb of the turntable, rises thereby lifting the vehicle off the turntable, and carries it onto the shuttle 114.

The shuttle 114 then moves sideways until it is aligned with the lift 116.2. The movable comb lifts the vehicle, carries it into the lift 116.2 and then lowers it onto the fixed comb of the lift 116.2 before retracting into the shuttle 114. The lift 116.2 carries the vehicle to an upper (or lower) parking level where it is removed from the lift by one of the movable combs of the shuttle 128, moved sideways, and then carried by the movable comb on which it is supported into one of the parking bays 122.

If any one of the left hand group of three bays 118 is empty, the vehicle can be placed in that instead of being put in the lift.

The vehicle is returned to the owner by the reverse of the procedure described. The turntable with the returned vehicle on it is in a position at a convenient angle, which may be a right angle to the illustrated position of the turntable 110.1 so that the driver can easily drive off the turntable into the exit road ER.

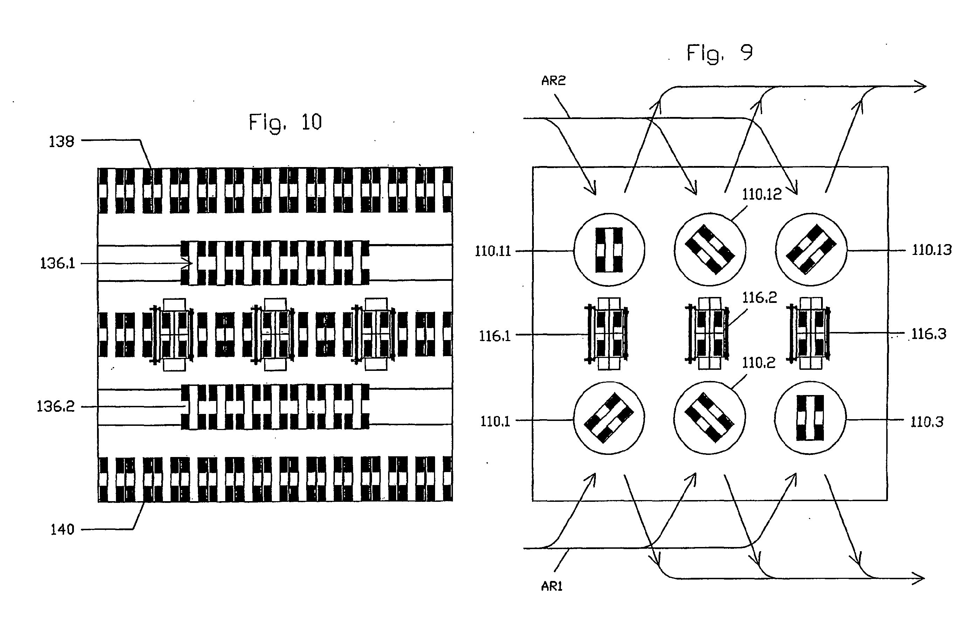

In Figures 9 and 10 a parking garage is shown in which there is vehicle access from two approach roads AR1 and AR2. The garage includes two sets of three turntables 110.1, 110.2, 110.3, 110.11, 110.12, 110.13 and three lifts 116.1, 116.2, 116.3. In the embodiment of Figures 9 and 10, at entry level, the movable combs form parts of the turntables.

At each parking level there are two shuttles 136.1, 136.2. The shuttles have movable combs for moving vehicles in and out of the lifts and in and out of the parking bays.

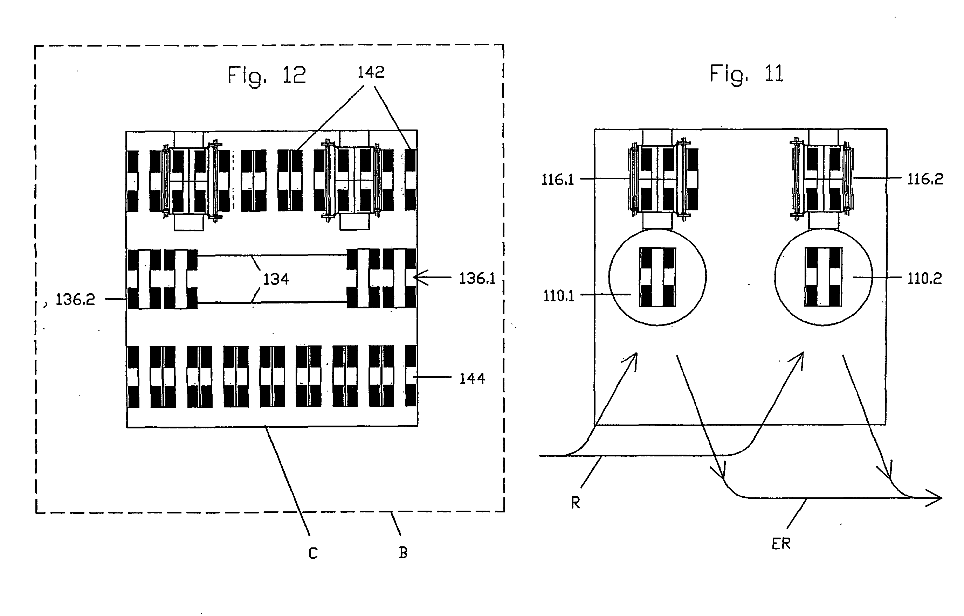

In Figures 11 and 12 a structure similar to that of Figures 9 and 10 is shown which is specifically intended for construction on a rectangular site smaller than that of Figures 9 and 10 and which has access from only one side. The same reference numerals are used in Figures 11 and 12 as are used in Figures 9 and 10. Two independently movable shuttles 136.1, 136.2 are provided at each parking level. The outer bays are used as transfer bays and the inner ones (ten per floor) are used as parking bays.

In Figures 9 to 12 the vehicles are transferred from the turntables to the lifts by movable combs of the lifts once the turntables and lifts are aligned. At the parking levels the combs of the lifts act as fixed combs and the movable combs of the shuttles 136.1, 136.2 remove the vehicles from the lifts. These movable combs also load the vehicles into and remove them from the rows of parking bays designated 138, 140 in Figure 10 and 42, 44 in Figure 12.

If the site is bigger than shown in Figure 11 the structure of Figures 11 and 6 can form the core of a residential or office building. The outline of the core is shown by the line C in Figure 12 and the outline of the building by the line B. Between the lines B and C there can be office space or residential apartments. The size of the office space or number of apartments is dependent on the size of the site and on the number of parking bays which are required in the core.

## Claims

1. A lift (16) for a storage system, the lift (16) comprising two sets of endless elements (42, 44) with load supporting platforms (40) attached thereto at intervals, the lift (16) having an operative run in which the platforms (40) are horizontal and can support a load and an inoperative run in which the platforms (40) are upright, the platforms (40) being permanently connected to one set of endless elements (42), the lift (16) being **characterized in that** the platforms (40) are detachably connected to the other set of endless elements (44) and **in that** said lift (16) comprises means at the upper and lower ends of the lift for displacing said platforms between a horizontal, operative position in which they are connected to both of said sets of elements (42, 44) and an inoperative, upright position in which they are connected to one of said sets of elements only.

2. A lift as claimed in claim 1, wherein each platform (40) comprises a series of parallel spaced bars (26) each of which is supported at one end only thereby to form a comb (28).

3. A lift as claimed in claim 2, wherein each platform (40) comprises two series of parallel bars (26), the bars of each series being supported at one end only thereby to form two combs (28), the free ends of the bars of the two combs facing one another across a gap.

4. A lift as claimed in any one of claims 1 to 3, wherein said one set of elements comprises a first pair of endless elements (42), the endless elements of the first pair being entrained around first pairs of upper wheels (46) rotatable about a first common axis and the lower wheels being rotatable about a second common axis parallel to said first common axis, there being means for driving the upper or lower pairs of wheels and said platforms (40) being pivotally and permanently connected to said first pair of endless elements (42), the other set of endless elements comprising a second pair of endless elements (44), the elements of the second pair being entrained around second pairs of upper and lower wheels (48), the upper wheels of the second pair being rotatable about a common third axis and the lower wheels of the second pair being rotatable about a common fourth axis, the third and fourth axes being parallel to one another, and there being means for releasably attaching the platforms (40) to the second pair of endless elements whilst the platforms are in the operative horizontal positions thereof.

## Patentansprüche

1. Lift (16) für ein Lagersystem, wobei der Lift (16) zwei Sätze von Endloselementen (42, 44) mit Last tragenden Plattformen (40) umfasst, die in Abständen daran befestigt sind, wobei der Lift (16) einen operativen Arbeitsgang hat, in dem die Plattformen (40) horizontal sind und ein Last tragen können, und einen inoperativen Arbeitsgang, in dem die Plattformen (40) aufrecht stehen, wobei die Plattformen (40) permanent mit einem Satz von Endloselementen (42) verbunden sind, wobei der Lift (16) **dadurch gekennzeichnet ist, dass** die Plattformen (40) lösbar mit dem anderen Satz von Endloselementen (44) verbunden sind und dass der Lift (16) Mittel an den oberen und unteren Enden des Lifts zum Verschieben der Plattformen zwischen einer horizontalen operativen Position, in der sie mit beiden Sätze von Elementen (42, 44) verbunden sind, und einer inoperativen aufrechten Position, in der sie nur mit einem der Sätze von Elementen verbunden sind, aufweist.

2. Lift nach Anspruch 1, wobei jede Plattform (40) eine Reihe parallel beabstandeter Stangen (26) umfasst, von welchen jede nur an einem Ende gehalten ist, um einen Kamm (28) zu bilden.

3. Lift nach Anspruch 2, wobei jede Plattform (40) zwei Serien paralleler Stangen (26) umfasst, wobei die Stangen jeder Serie nur an einem Ende gehalten sind, um **dadurch** zwei Kämme (28) zu bilden, wobei die freien Enden der Stangen der zwei Kämme einander über einen Spalt zugewandt sind.

4. Lift nach einem der Ansprüche 1 bis 3, wobei der eine Satz von Elementen ein erstes Paar von Endloselementen (42) umfasst, wobei die Endloselemente des ersten Paares um erste Paare von oberen Rädern (46) geführt sind, die um eine erste gemeinsame Achse drehbar sind, und die unteren Räder um eine zweite Achse, parallel zu der ersten gemeinsamen Achse, drehbar sind, wobei Mittel zum Antreiben des oberen und unteren Paares von Rädern vorhanden sind, und die Plattformen (40) schwenkbar und permanent mit dem ersten Paar von Endloselementen (42) verbunden sind, wobei der andere Satz von Endloselementen ein zweites Paar von Endloselementen (44) umfasst, wobei die Elemente des zweiten Paares um das zweite Paar von oberen und unteren Rädern (48) geführt sind, wobei die oberen Räder des zweiten Paares um eine gemeinsame dritte Achse drehbar sind, und die unteren Räder des zweiten Paares um eine gemeinsame vierte Achse drehbar sind, wobei die dritte und vierte Achse parallel zueinander liegen, und Mittel zum lösbaren Befestigen der Plattformen (40) an dem zweiten Paar von Endloselementen vorhanden sind, während sich die Plattformen in den operativen horizontalen Positionen befinden.

## Revendications

1. Ascenseur (16) pour une installation de stockage, l'ascenseur (16) comprenant deux jeux d'éléments sans fin (42, 44) avec des plates-formes (40) formant support de charge qui y sont attachées par intervalles, l'ascenseur (16) ayant un brin actif dans lequel les plates-formes (40) sont horizontales et peuvent supporter une charge et un brin inactif dans lequel les plates-formes (40) sont redressées, les plates-formes (40) étant reliées en permanence à un premier jeu d'éléments sans fin (42), l'ascenseur (16) étant **caractérisé en ce que** les plates-formes (40) sont reliées de façon détachable à l'autre jeu d'éléments sans fin (44) et **en ce que** ledit ascenseur (16) comprend des moyens situés aux extrémités supérieure et inférieure de l'ascenseur pour déplacer lesdites plates-formes entre une position horizontale, active, dans laquelle elles sont reliées aux deux jeux d'éléments (42, 44), et une position inactive, redressée, dans laquelle elles sont reliées seulement à un desdits jeux d'éléments

2. Ascenseur selon la revendication 1, dans lequel chaque plate-forme (40) comprend une série de barres parallèles espacées (26) dont chacune est supportée seulement à une extrémité de façon à former un peigne (28).

3. Ascenseur selon la revendication 2, dans lequel chaque plate-forme (40) comprend deux séries de barres parallèles (26), les barres de chaque série étant supportées seulement à une extrémité de manière à former deux peignes (28), les extrémités libres des barres des deux peignes se faisant mutuellement face de part et d'autre d'un espace libre.

4. Ascenseur selon une quelconque des revendications 1 à 3 , dans lequel ledit premier jeu d'éléments comprend une première paire d'éléments sans fin (42), les éléments sans fin de la première paire étant entraînés autour de premières paires de roues supérieures (46) qui peuvent tourner autour d'un premier axe commun fixe et les roues inférieures pouvant tourner autour d'un second axe commun, parallèle audit premier axe commun, des moyens étant prévus pour entraîner les paires de roues supérieures et inférieures et lesdites plates-formes (40) étant reliées de façon pivotante et permanente à ladite première paire d'éléments sans fin (42), l'autre jeu d'éléments sans fin comprenant une seconde paire d'éléments sans fin (44), les éléments de la seconde paire étant entraînés autour de secondes paires de roues supérieures et inférieures (48), les roues supérieures de la seconde paire pouvant tourner autour d'un troisième axe commun et les roues inférieures de la seconde paire pouvant tourner autour d'une quatrième axe commun, les troisième et quatrième axes étant parallèles entre eux et des moyens étant prévus pour attacher les plates-formes (40) de façon détachable à la seconde paire d'éléments sans fin, pendant que les plates-formes sont dans leurs positions horizontales actives.
